# EUROPÄISCHE PATENTSCHRIFT

(11) **EP 2 611 641 B1**
(45) Veröffentlichungstag und Bekanntmachung des Hinweises auf die Patenterteilung: **18.05.2016**
(21) Anmeldenummer: 11740895.5
(22) Anmeldetag: 29.07.2011
(51) Int. Cl.: B60K 28/06, G08B 21/06, B60W 40/08

(54) **VERFAHREN ZUR ERKENNUNG FEHLENDER FAHRERAKTIVITÄT AM LENKRAD EINES KRAFTFAHRZEUGS**
METHOD FOR DETECTING A LACK OF DRIVER ACTIVITY AT THE STEERING WHEEL OF A MOTOR VEHICLE
PROCÉDÉ DE DÉTECTION D'UN MANQUE D'ACTIVITÉ DU CONDUCTEUR SUR LE VOLANT D'UN VÉHICULE AUTOMOBILE

(30) Priorität: 30.08.2010 DE 102010039949
(43) Veröffentlichungstag der Anmeldung: 10.07.2013
(73) Patentinhaber: Bayerische Motoren Werke Aktiengesellschaft, 80809 München (DE)
(72) Erfinder: GANESCH, Dieter, 81245 Muenchen (DE)
(86) Internationale Anmeldenummer: PCT/EP2011/063100
(87) Internationale Veröffentlichungsnummer: WO 2012/028404

(56) Entgegenhaltungen:
- EP-A1- 1 997 666
- DE-A1-102008 021 150

## Beschreibung

Die Erfindung betrifft ein Verfahren zur Erkennung fehlender Fahreraktivität am Lenkrad eines Kraftfahrzeugs, wobei wiederholt das am Lenkrad ausgeübte Handmoment des Fahrers gemessen wird und für den Fall, dass in mehreren aufeinander folgenden Messungen der Betrag einer Handmoment-Größe einen Schwellwert nicht überschreitet, auf fehlende Aktivität des Fahrers geschlossen wird. Zum Stand der Technik wird insbesondere auf die gattungsbildende DE 10 2008 021 150 A1 verwiesen, und ferner im Laufe der folgenden Beschreibung auf die DE 34 21 253 C2 und die DE 10 2005 014 237 A1.

In der erstgenannten Schrift ist das auch der vorliegenden Erfindung zugrunde liegende Problem ausführlich beschrieben, nämlich mit einer elektronischen Steuereinheit erkennen zu können, ob der Fahrer eines mit einem Fahrerassistenzsystem ausgerüsteten Fahrzeugs, und insbesondere mit einem solchen Fahrerassistenzsystem, welches das Fahrzeug selbsttätig zumindest geringfügig lenken kann, ausreichend aufmerksam und insbesondere jederzeit in der Lage ist, selbst das Lenken des Fahrzeugs zu übernehmen. Bei sich fortbewegendem Fahrzeug wird das vom Fahrer an das Lenkrad angelegte Handmoment gemessen, welches selbstverständlich nur dann einen Betrag ungleich Null aufweisen kann, wenn der Fahrer das Lenkrad zumindest berührt. Solange der Betrag des Handmoments nennenswert größer Null ist, kann also von einer ausreichenden Aktivität des Fahrers ausgegangen werden.

In dieser genannten Schrift ist auch beschrieben, dass man nicht sofort, wenn lediglich für eine kurze Zeitspanne kein Handmoment mit einem Betrag größer Null erkannt wird, auf fehlende Fahreraktivität schließen möchte, weshalb in dieser DE 10 2008 021 150 A1 ein spezielles Verfahren beschrieben ist, wie günstig über einen gewissen Zeitraum hinweg die Auswertung bezüglich des in diesem Zeitraum aufeinanderfolgend mehrfach gemessenen Handmoments erfolgen kann. Selbstverständlich sind auch andere Verfahren möglich, die im wesentlichen zu einem vergleichbaren Ergebnis führen können und von denen eines beiläufig zusammen mit der vorliegenden Erfindung beschrieben wird.

Letzteres, nämlich ein anderer Rechenablauf oder Steuerungsablauf als der in der DE 10 2008 021 150 A1 dargestellte ist jedoch nicht der wesentliche Inhalt der vorliegenden Erfindung. Vielmehr ist es Aufgabe der vorliegenden Erfindung, ein Verfahren zur Erkennung fehlender Fahreraktivität am Lenkrad eines sich fortbewegenden Kraftfahrzeugs nach dem Oberbegriff des Anspruchs 1 dahingehend weiter zu bilden, dass die Genauigkeit des Verfahrens weiter gesteigert wird. Mit der gesteigerten Genauigkeit soll sowohl eine geringe Anzahl von Fehlalarmen aufgrund unnötigerweise erkannter, nur vermeintlich fehlender Fahreraktivität ausgelöst werden, als auch in Fällen, in denen tatsächlich keine ausreichende Fahreraktivität vorliegt, eine solche fehlende Fahreraktivität zuverlässig und rechtzeigt erkannt werden.

Die Lösung dieser Aufgabe ist für ein Verfahren nach dem Oberbegriff des Anspruchs 1 dadurch gekennzeichnet, dass der Betrag des Schwellwerts, bei dessen mehrfachem aufeinanderfolgenden Unterschreiten durch aktuelle Werte einer Handmoment-Größe auf fehlende Fahreraktivität geschlossen wird, vom Oberflächenzustand, insbesondere vom Grad der Unebenheit, der befahrenen Fahrbahn abhängig ist. Vorteilhafte Weiterbildungen sind Inhalt der Unteransprüche.

Erfindungsgemäß ist der Schwellwert, mit dem eine bzw. die sog. Handmoment-größe, bei welcher es sich beispielsweise oder vorzugsweise um den Betrag des gemessenen Handmoments handeln kann, verglichen wird, nicht konstant, sondern abhängig von einer wesentlichen Randbedingung, welche für einen Rückschluss auf ausreichende oder fehlende Fahreraktivität allein aus der Größe des Handmoments von nicht zu vernachlässigender Bedeutung ist. Erfindungsgemäß soll der Oberflächenzustand oder die Oberflächenqualität der Fahrbahn Berücksichtigung finden, wobei der wesentlichste Einflussfaktor bei der Berücksichtigung der Fahrbahn-Qualität oder des Fahrbahnzustandes die Ebenheit oder Unebenheit der Fahrbahn ist. Es wurde nämlich erkannt, dass für eine tendenziell mehr unebene Fahrbahn, die beispielsweise eine Vielzahl von Querrillen und/oder Längsrillen oder kleinere Schlaglöcher aufweist, für eine Feststellung ausreichender Fahreraktivität ein betragsmäßig größeres Handmoment gefordert werden sollte, als wenn sich das Fahrzeug auf einer absolut ebenen Fahrbahn, beispielsweise gebildet durch glatten Asphalt, bewegt. Bei gutem Oberflächenzustand der Fahrbahn, der sich auch durch eine geringe Zahl von Unebenheiten, die insbesondere nur geringe Dimensionen aufweisen, auszeichnet, kann somit ein nennenswert niedrigerer Schwellwert für die Handmomentgröße angesetzt werden als bei schlechtem Fahrbahnzustand, der beispielsweise durch eine Vielzahl kleinerer oder größerer Schlaglöcher gekennzeichnet sein kann. Es sei jedoch ausdrücklich darauf hingewiesen, dass der Begriff "Oberflächenzustand der Fahrbahn" nicht auf die Eigenschaft "Unebenheit" bzw. "Ebenheit" beschränkt ist. Vielmehr können auch unterschiedliche Schwellwerte in Abhängigkeit vom Reibwert zwischen der Fahrbahn und den Rädern bzw. Reifen des Fahrzeugs vorgesehen sein. Bekanntlich kann dieser Reibwert mit ausreichender Genauigkeit geschätzt werden.

Grundsätzlich bestehen verschiedene Möglichkeiten zur Erkennung des Oberflächenzustandes der Fahrbahn. Eine Möglichkeit stellt eine automatische optische Analyse dar, beispielsweise über die Auswertung von Kamerabildern der Fahrbahn, oder durch Abtastung bspw. mit Laserstrahl oder Ultraschall; auch letzteres soll vorliegend unter den Begriff der optischen Analyse fallen. Grundsätzlich bekannt sind aber auch weitere Verfahren, wozu auf die eingangs an zweiter und dritter Stelle genannten Schriften verwiesen werden kann. So kann beispielsweise ein sog. Unebenheits-Grad der Fahrbahn aus einer gemessenen Vertikalbeschleunigung in der Radaufhängung (bspw. im Dämpfer) des Fahrzeugs abgeleitet werden. Alternativ oder zusätzlich ist es auch möglich, den Unebenheits-Grad der Fahrbahn aus Verzögerungs- und/oder Beschleunigungssignalen zumindest eines Rads des Fahrzeugs, die aus den Rad-Drehzahlen gewonnen werden können, abzuleiten. Grundsätzlich können im Rahmen einer solchen Auswertung entsprechende Sensorsignale insbesondere einer Tiefpassfilterung unterworfen werden und/oder es kann das Signalrauschen ausgewertet werden. Unabhängig davon, welches Verfahren zum Erkennen des Fahrbahnzustands angewandt wird, kann der erkannte Fahrbahnzustand daraufhin klassifiziert werden und es kann dann ein dieser Klassifizierung zugeordneter Schwellwert für die Handmomentgröße ausgewählt werden, mit dem daraufhin die aufeinanderfolgend ermittelten Werte der Handmomentgröße verglichen werden.

Vorzugsweise erfolgt ein solcher Vergleich aufeinanderfolgend ermittelter Werte der Handmomentgröße mit dem aktuellen Schwellwert bei sich fortbnewegendem Fahrzeug über eine gewisse Zeitspanne hinweg, so dass nur dann, wenn mehrere aufeinander folgende Messwerte der Handmoment-Größe unterhalb des relevanten Schwellwertes liegen, auf fehlende Fahreraktivität geschlossen wird. Überschreitet hingegen ein ermittelter Wert der Handmoment-Größe einen zugehörigen Minimalwert, so wird vorzugsweise auf ausreichende Fahreraktivität geschlossen und folglich mit einer neuen Reihe von aufeinander folgenden Messungen des Handmoments begonnen, wobei die vorangegangenen Messungen (vor demjenigen Messwert, der den Minimalwert überschritten hat) für die Erkennung fehlender Aktivität nicht berücksichtigt werden. Mit Überschreiten des genannten Minimalwerts durch einen aktuellen Wert der Handmoment-Größe wird somit eine neue genannte Zeitspanne angestoßen oder in Gang gesetzt, wobei ausdrücklich darauf hingewiesen sei, dass die genannte Zeitspanne keine fest vorgegebene Zeit-Dauer sein muss, sondern beispielsweise auch durch eine bestimmte Anzahl von aufeinander folgenden Messungen des Handmoments festgelegt sein kann. Was den genannten Minimalwert betrifft, so kann dieser gleich dem genannten Schwellwert sein, alternativ kann er sich von diesem unterscheiden. Auch kann vorgesehen sein, dass nur dann auf ausreichende Fahreraktivität geschlossen und folglich mit einer neuen Reihe von aufeinander folgenden Messungen des Handmoments begonnen wird, wenn die Handmoment-Größe ihren zugeordneten Minimalwert kontinuierlich während einer gewissen Zeitdauer überschreitet. Dabei kann diese gewisse Zeitdauer konstant oder variabel sein; im letztgenannten Fall kann diese Zeitdauer vom Oberflächenzustand der befahrenen Fahrbahn abhängig sein. Eine solche Abhängigkeit vom Oberflächenzustand, insbesondere vom Grad der Unebenheit der befahrenen Fahrbahn kann im übrigen auch der genannte Minimalwert, der überschritten werden muss, damit auf ausreichende Fahreraktivität geschlossen wird, aufweisen.

Nach einer vorteilhaften Weiterbildung kann die Größe einer genannten Zeitspanne, innerhalb derer mehrere aufeinander folgende Messungen des Handmoments durchgeführt werden, ehe im Falle einer andauernden Schwellwert-Unterschreitung auf fehlende Aktivität des Fahrers geschlossen wird, und/oder die Größe der genannten Zeitdauer, während derer aufeinanderfolgende Werte der Handmoment-Größe den Minimalwert überschreiten müssen, damit mit einer neuen Reihe von aufeinander folgenden Messungen des Handmoments begonnen wird, von der Fahrgeschwindigkeit des Fahrzeugs abhängig sein. Üblicherweise wird die Zeit, die zwischen einer ersten und einer zweiten Messung des Handmoments verstreicht, konstant und von der Taktzeit der in einer elektronischen Steuereinheit, in welcher das erfindungsgemäße Verfahren implementiert ist, vorgesehenen CPU oder dgl. abhängig sein. Während einer längeren Zeitspanne, in welcher jede gemessene Handmomentgröße niederiger als der genannte Schwellwert sein muss, damit auf fehlende Fahreraktivität geschlossen wird, wird somit eine größere Zahl von Messwerten des Handmoments betrachtet als bei einer kürzeren Zeitspanne. Während einer längeren Zeitspanne besteht folglich eine größere Wahrscheinlichkeit, dass der Fahrer das Lenkrad in dieser Zeitspanne aktiv betätigt und dass somit eine Handmoment-Größe festgestellt wird, die den genannten Minimalwert überschreitet. Da bei einer niedrigeren Fahrgeschwindigkeit des Fahrzeugs eine kurzzeitige Inaktivität des Fahrers naturgemäß ein geringeres Gefahrenpotential enthält als bei einer höheren Fahrgeschwindigkeit des Fahrzeugs kann somit die genannte Zeitspanne, innerhalb derer aufeinander folgend ermittelte Werte der Handmoment-Größe mit einem Schwellwert verglichen werden und wobei dann, wenn sämtliche Werte der Handmomentgröße innerhalb dieser Zeitspanne unterhalb des Schwellwert liegen, auf fehlende Fahreraktivität geschlossen wird, bei niedrigen Fahrgeschwindigkeiten länger sein als bei höheren Fahrgeschwindigkeiten des Fahrzeugs. Beispielsweise kann diese besagte Zeitspanne bei einer Fahrgeschwindigkeit von 10 km/h in der Größenordnung von 5 Sekunden liegen und bei einer Fahrgeschwindigkeit von 40 km/h nur 2 Sekunden betragen. Zwischen diesen Beispiel-Werten ist bspw. eine lineare Interpolation möglich. Ausdrücklich darauf hingewiesen sei noch, dass anstelle einer vorgegebenen Zeitspanne selbstverständlich auch vorgegeben sein kann, wie viele aufeinander folgende Messwerte des Handmoments bzw. daraus abgeleitete Werte der Handmoment-Größe auf ein Unterschreiten des Schwellwerts hin positiv überprüft werden müssen, ehe auf fehlende Fahreraktivität geschlossen wird. Auch eine solche vorgegebene Anzahl von Messwerten kann variabel und insbesondere von der Fahrgeschwindigkeit des Fahrzeugs abhängig sein und soll vorliegend unter den Begriff der variablen bzw. von der Fahrgeschwindigkeit des Fahrzeugs abhängigen Zeitspanne fallen.

Wie bereits erwähnt kann als genannte Handmoment-Größe der Betrag des faktisch gemessenen Handmoments verwendet werden, alternativ ist jedoch auch die Verwendung des Gradienten des Handmoments, d.h. der zeitlichen Ableitung des Handmoments bzw. eine Verwendung der Handmomenten-Änderungsgeschwindigkeit möglich, so wie dies bereits in der eingangs erstgenannten Schrift erwähnt ist. Eine weitere Steigerung der Genauigkeit des erfindungsgemäßen Verfahrens kann erzielt werden, wenn neben dem Betrag des Handmoments als erste Handmoment-Größe als weitere, zweite Handmoment-Größe der Gradient des Handmoments berücksichtigt wird. Dabei wird nur für den Fall, dass in mehreren aufeinander folgenden Messungen sowohl der Betrag der ersten Handmomentgröße den vom Fahrbahn-Zustand abhängigen ersten Schwellwert nicht überschreitet, als auch dass die zweite Handmoment-Größe einen für diese vorgesehenen zweiten Schwellwert nicht überschreitet, auf fehlende Aktivität des Fahrers geschlossen. Der Schwellwert für die zweite Handmoment-Größe kann dabei konstant oder ebenfalls vom Fahrbahnzustand bzw. vom Oberflächenzustand der befahrenen Fahrbahn abhängig sein. Bei Überprüfung zweier (oder mehrerer) verschiedener Handmoment-Größen auf Unterschreiten eines jeweils zugeordneten Schwellwerts innerhalb einer vorgegebenen, vorzugsweise variablen Zeitspanne wird vorzugsweise bereits dann, wenn auch nur eine dieser Handmoment-Größen ihren zugehörigen Schwellwert überschreitet, mit einen neuen Reihe von aufeinander folgenden Messungen des Handmoments (und somit mit einer neuen Zeitspanne) begonnen, so dass die vorangegangenen Messungen für die Erkennung fehlender Fahrer-Aktivität somit nicht berücksichtigt werden. An dieser Stelle sei nochmals ausdrücklich darauf hingewiesen, dass es nicht zwingend erforderlich ist, eine fest vorgegebene oder variable Zeitspanne für die Überprüfung aufeinander folgender Werte der Handmoment-Größe(n) hinsichtlich ihres Schwellwerts zu verwenden; vielmehr kann auch die Anzahl von aufeinander folgenden Messwerten des Handmoments festgelegt sein, wobei auch diese vorgegebene Anzahl von der Fahrgeschwindigkeit des Fahrzeugs abhängig sein kann.

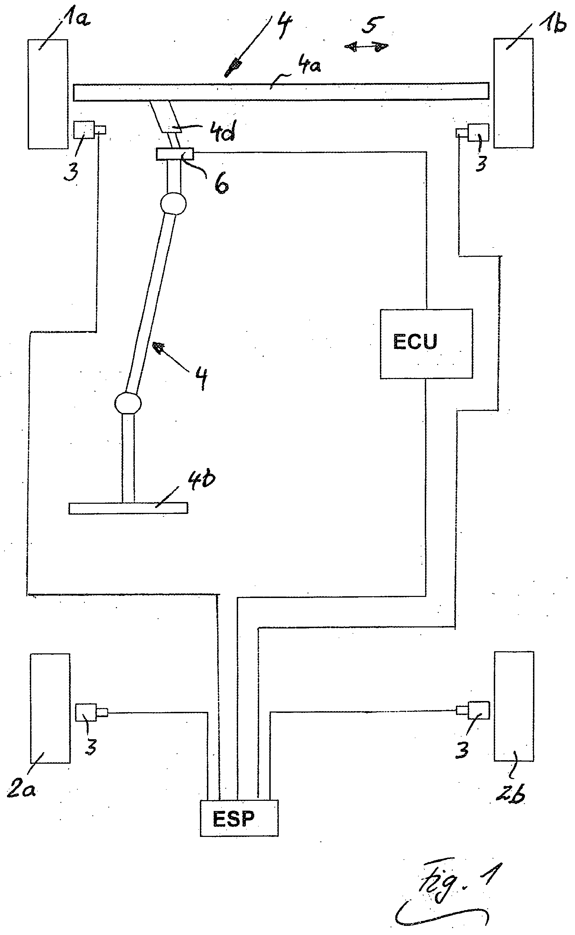

Im Folgenden wird ein Ausführungsbeispiel der vorliegenden Erfindung unter Bezugnahme auf die beigefügten Figuren 1 - 3 kurz und stark vereinfacht beschrieben:
In Figur 1 sind stark abstrahiert die beiden lenkbaren Vorderräder 1a und 1b sowie dessen beiden Hinterräder 2a und 2b dargestellt. Jedem Rad 1a, 1b, 2a, 2b ist ein Drehzahlsensor 3 zugeordnet, deren Signale einer elektronischen Steuereinheit ESP zugeführt werden, in welcher unter anderem ein dem Fachmann bekanntes elektronisches Fahrzeug-Stabilitätsprogramm ausgeführt wird. Die lenkbaren Vorderräder 1 a, 1 b sind über ein dem Fachmann ebenfalls bekanntes Zahnstangen-Lenksystem 4 lenkbar, dessen abstrakt dargestellte Zahnstange 4a gemäß Pfeilrichtung 5 quer verlagerbar ist, um an den Vorderrädern 1a bzw. 1b einen gewünschten Spurwinkel einzustellen. Diese Querverlagerung der Zahnstange 4a bewirkt der Fahrer des Fahrzeugs mit seinem Lenkrad 4b, das über eine Lenkspindel 4c und ein Lenkgetriebe 4d, in dem auch eine beispielsweise elektromotorische Lenkunterstützungs-Vorrichtung integriert sein kann, entsprechend auf die Zahnstange 4a einwirkt. In der Lenkspindel 4c oder einem anderen geeigneten Element des Lenksystems 4 ist ein Drehmoment-Sensor 6 integriert, mit dem das Moment bzw. Drehmoment, mit welchem der Fahrer sein Lenkrad 4b festhält oder verdreht, gemessen werden kann. Dieses Moment wird im weiteren als Handmoment bezeichnet.

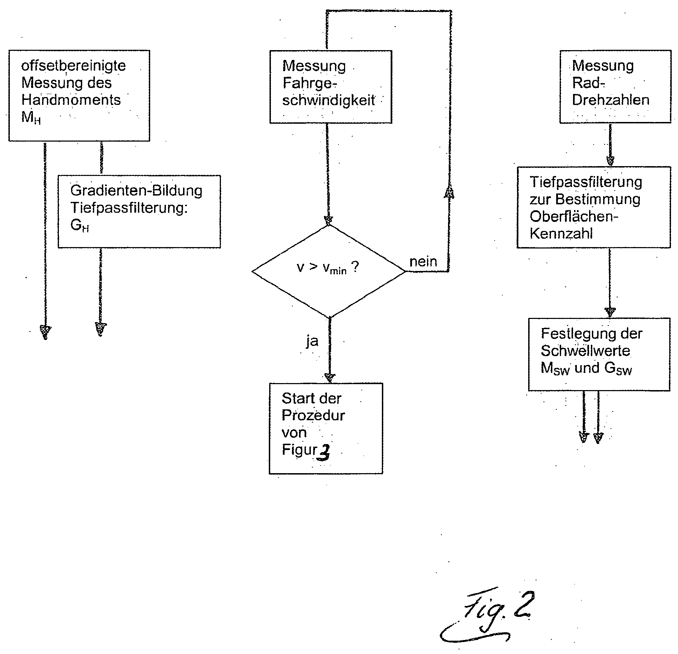

Wie in Figur 2 dargestellt ist, wird fortlaufend der Betrag des Handmoments des Fahrers am Lenkrad 4b gemessen, das heißt, desjenigen Drehmoments, mit welchem der Fahrer das Lenkrad festhält oder zumindest geringfügig verdreht. Dieser Messwert wird offset-bereinigt, woraus sich eine im weiteren verwendete erste Handmoment-Größe M_{H} ergibt und es wird aus dieser Handmoment-Größe M_{H} durch Ableitung nach der Zeit der sog. Handmomenten-Gradient bestimmt. Aus diesem letztgenannten Signal werden die hochfrequenten Anteile durch Tiefpassfilterung entfernt, woraus sich eine im weiteren verwendete zweite Handmomentengröße G_{H} ergibt.

Parallel dazu wird gemäß Figur 2 aus den fortlaufend mittels der Drehzahlsensoren 3 gemessenen Drehzahlen der Fahrzeug-Räder durch Tiefpassfilterung und weitere Rechenschritte eine die Rauhigkeit der Fahrbahn und somit den Oberflächenzustand der Fahrbahn repräsentierende Oberflächenkennzahl (vorliegend in der Steuereinheit ESP) bestimmt, die für die Beschaffenheit des aktuell vorliegenden Fahrbahn-Abschnitts charakteristisch ist. Diese wird einer weiteren elektronischen Steuereinheit ECU mitgeteilt, in welcher das erfindungsgemäße Verfahren ausgeführt wird. Anhand der aktuellen Oberflächenkennzahl wird in der Steuereinheit ECU ein vor der Figurenbeschreibung grundsätzlich erläuterter Schwellwert M_{SW} für das Handmoment bzw. für die erste Handmoment-Größe M_{H} und ein weiterer (analoger grundsätzlich bereits erläuterter) Schwellwert G_{SW} für den Handmoment-Gradienten bzw. für die zweite Handmomentgröße G_{H} bestimmt. Dabei sind diese Schwellwert M_{SW} und G_{SW} in der elektronischen Steuereinheit ECU tabellarisch in Abhängigkeit von der Oberflächenkennzahl abgelegt.

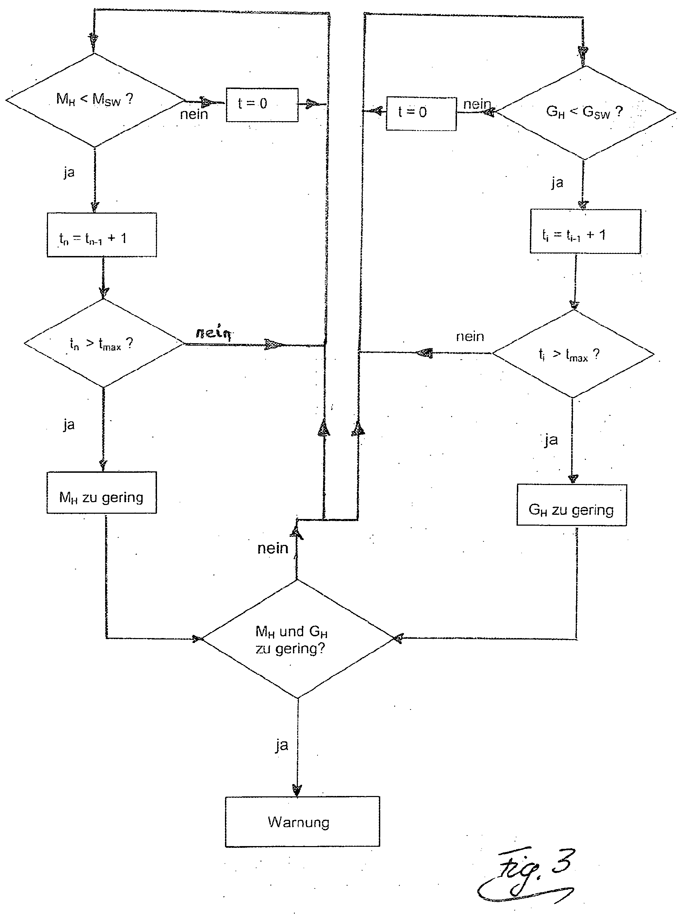

Ebenfalls parallel hierzu wird abgefragt, ob die Fahr-Geschwindigkeit v des Fahrzeugs oberhalb eines Minimal-Wertes vₘᵢₙ liegt, da nur oberhalb einer geringen Geschwindigkeit von beispielsweise 1,0 km/h überprüft werden muss, ob der Fahrer das Lenkrad 4b festhält bzw. führt. Bejahendenfalls wird die Steuereinheit ECU wie in Figur 3 dargestellt und im weiteren erläutert tätig.

Ausgehend von einem Zeitpunkt t = 0 wird im linksseitig dargestellten Kreis zunächst überprüft, ob die erste Handmoment-Größe M_{H} kleiner als der zugehörige Schwellwert M_{SW} ist und es wird parallel hierzu im rechtsseitig dargestellten Kreis überprüft, ob die zweite Handmoment-Größe G_{H} kleiner als der zugehörige Schwellwert G_{SW} ist. Diese Überprüfung kann dabei quasi eine Momentaufnahme darstellen oder sich über einen sehr kurzen Zeitraum von einigen SekundenBruchteilen erstrecken. Werden diese beiden parallel durchgeführten Abfragen verneint, d.h. liegt entweder ein Handmoment M_{H} größer dem zugehörigen Schwellwert M_{SW} oder ein Handmomenten-Gradient G_{H} größer dem zugehörigen Schwellwert G_{SW} vor, so verbleibt der jeweilige Zeitzähler tₙ (für den linksseitigen Kreis) bzw. tᵢ (für den rechtsseitigen Kreis) auf dem Wert t = 0.

Muss jedoch zumindest eine dieser parallel durchgeführten Abfragen bejaht werden, so wird der jeweilige Zeitzähler tₙ bzw. tᵢ um ein Inkrement erhöht, woraufhin überprüft wird, ob der jeweilige Zeitzähler bereits einen Maximalwert tₘₐₓ erreicht hat. Ist letzteres nicht der Fall, so wird neuerlich abgefragt, ob die erste bzw. zweite Handmoment-Größe M_{H} bzw. G_{H} kleiner als der jeweilige Schwellwert M_{SW} bzw. G_{SW} ist.

Wurde oder ist jedoch durch die genannte Erhöhung eines der beiden Zeitzähler tₙ bzw. tᵢ ein vorgegebener Maximalwert tₘₐₓ für die Zeitzäher überschritten, so wird festgestellt, dass die zugehörige Handmoment-Größe (M_{H} respektive G_{H}) zu gering ist. Daraufhin wird überprüft, ob die jeweils andere Handmoment-Größe (d.h. dann G_{H} respektive M_{H}) ebenfalls zu gering ist. Bejahendenfalls wird eine Warnung dahingehend ausgegeben, dass der begründete Verdacht besteht, dass der Fahrer das Lenkrad 4b nicht ausreichend fest in Händen hält. Kann jedoch die letztgenannte Abfrage verneint werden, so wird die laufende Überwachung wie beschrieben fortgesetzt.

Selbstverständlich sind eine Vielzahl von Abwandlungen vom soweit anhand der beigefügten Figuren beschriebenen Verfahren möglich, wobei vor der Figurenbeschreibung bereits mehrere Möglichkeiten angegeben sind, in welcher Art solche Abwandlungen ausgebildet sein können. Vorliegend ist der detaillierte Ablauf des Verfahrens auch nicht Inhalt eines der Patentansprüche, sondern es wird, wie ausführlich beschrieben wurde, beansprucht, dass zumindest einer der genannten Schwellwerte (M_{SW} oder G_{SW)}) für eine der genannten Handmoment-Größen (M_{H} oder G_{H}) vom Oberflächenzustand, insbesondere vom Grad der Unebenheit der Fahrbahn bzw. von der Rauhigkeit der Fahrbahn abhängig ist.

## Patentansprüche

1. Verfahren zur Erkennung fehlender Fahreraktivität am Lenkrad (4b) eines Kraftfahrzeugs, wobei wiederholt das am Lenkrad (4b) ausgeübte Handmoment des Fahrers gemessen wird und für den Fall, dass in mehreren aufeinander folgenden Messungen der Betrag einer Handmoment-Größe (M_{H} , G_{H}) einen Schwellwert (M_{SW}, G_{SW}) nicht überschreitet, auf fehlende Aktivität des Fahrers geschlossen wird, **dadurch gekennzeichnet, dass** der Betrag des Schwellwerts (M_{SW} , G_{SW}) vom Oberflächenzustand, insbesondere vom Grad der Unebenheit, der befahrenen Fahrbahn abhängig ist.

2. Verfahren nach Anspruch 1,
**dadurch gekennzeichnet, dass** der Unebenheits-Grad der Fahrbahn aus einer gemessenen Vertikalbeschleunigung in der Radaufhängung des Fahrzeugs abgeleitet wird.

3. Verfahren nach Anspruch 1,
**dadurch gekennzeichnet, dass** der Unebenheits-Grad der Fahrbahn aus Verzögerungs- und/oder Beschleunigungssignalen zumindest eines Rads des Fahrzeugs abgeleitet wird.

4. Verfahren nach einem der vorangegangenen Ansprüche, wobei als erste Handmoment-Größe (M_{H}) der Betrag des gemessenen Handmoments verwendet wird,
**dadurch gekennzeichnet, dass** als weitere Handmoment-Größe (G_{H}) der Gradient des Handmoments berücksichtigt wird, wobei nur für den Fall, dass in mehreren aufeinander folgenden Messungen sowohl der Betrag der ersten Handmomentgröße (M_{H}) den vom FahrbahnZustand abhängigen ersten Schwellwert (M_{SW}) nicht überschreitet, als auch dass die weitere oder zweite Handmoment-Größe (G_{H}) einen für diese vorgesehenen zweiten Schwellwert (G_{SW}) nicht überschreitet, auf fehlende Aktivität des Fahrers geschlossen wird.

5. Verfahren nach einem der vorangegangenen Ansprüche,
**dadurch gekennzeichnet, dass** die Größe einer Zeitspanne, innerhalb derer mehrere aufeinander folgende Messungen des Handmoments durchgeführt werden, ehe im Falle einer andauernden Schwellwert-Unterschreitung auf fehlende Aktivität des Fahrers geschlossen wird, von der Fahrgeschwindigkeit des Fahrzeugs abhängig ist.

6. Verfahren nach einem der vorangegangenen Ansprüche,
**dadurch gekennzeichnet, dass** für den Fall, dass zumindest eine der ggf. verschiedenen berücksichtigten Handmoment-Größen einen zugeordneten Minimalwert überschreitet, mit einen neuen Reihe von aufeinander folgenden Messungen des Handmoments begonnen wird, so dass die vorangegangenen Messungen für die Erkennung fehlender Fahrer-Aktivität somit nicht berücksichtigt werden.

7. Verfahren nach Anspruch 6,
**dadurch gekennzeichnet, dass** nur dann mit einer neuen Reihe von aufeinander folgenden Messungen des Handmoments begonnen wird, wenn eine der Handmoment-Größen ihren zugeordneten Minimalwert kontinuierlich während einer gewissen Zeitdauer überschreitet.

8. Verfahren nach Anspruch 6 oder 7,
**dadurch gekennzeichnet, dass** die Größe des Minimalwerts und/oder der gewissen Zeitdauer vom Oberflächenzustand, insbesondere vom Grad der Unebenheit, der befahrenen Fahrbahn abhängig ist.

## Claims

1. A method for detecting a lack of driver activity at the steering wheel (4b) of a motor vehicle, wherein the manual torque which is exerted by the driver on the steering wheel (4b) is measured repeatedly and if the amount of a manual torque variable (M_{H} , G_{H}) does not exceed a threshold value (M_{SW}, G_{SW}) in a plurality of successive measurements, it is inferred that there is a lack of driver activity, **characterised in that** the amount of the threshold value (Msw , Gsw) is a function of the surface condition, more especially of the degree of unevenness of the road being travelled.

2. A method according to claim 1, **characterised in that** the degree of unevenness of the road is derived from a measured vertical acceleration in the wheel suspension of the vehicle.

3. A method according to claim 1, **characterised in that** the degree of unevenness of the road is derived from deceleration and/or acceleration signals of at least one wheel of the vehicle.

4. A method according to any one of the preceding claims, wherein the amount of the measured manual torque is used as the first manual torque variable (M_{H}), **characterised in that** the gradient of the manual torque is considered as a further manual torque variable (G_{H}), wherein only if, in a plurality of successive measurements, the amount of the first manual torque variable (M_{H}) does not exceed the first threshold value (Msw), which is a function of the condition of the road, and also if the further or second manual torque variable (G_{H}) does not exceed a second threshold value (G_{SW}) provided therefor, is a lack of driver activity inferred.

5. A method according to any one of the preceding claims, **characterised in that** the length of a time period, within which a plurality of successive measurements of the manual torque is made before a lack of driver activity is inferred if the threshold value is continuously fallen below, is a function of the driving speed of the vehicle.

6. A method according to any one of the preceding claims, **characterised in that** if at least one of the optionally different considered manual torque variables exceeds an associated minimum value, a new series of successive measurements of the manual torque is started so that the previous measurements are thereby not considered for detecting a lack of driver activity.

7. A method according to claim 6, **characterised in that** a new series of successive measurements of the manual torque is only started if one of the manual torque variables continuously exceeds the associated minimum value thereof for a particular period of time.

8. A method according to claim 6 or claim 7, **characterised in that** the magnitude of the minimum value and/or the length of the particular period of time is a function of the surface condition, more especially of the degree of unevenness of the road being travelled.

## Revendications

1. Procédé permettant de reconnaître un manque d'activité d'un conducteur sur le volant (4b) d'un véhicule, selon lequel on mesure de façon répétitive le couple manuel exercé par le conducteur sur le volant (4b), et lorsque, lors de plusieurs mesures successives la valeur de la grandeur du couple manuel exercée (M_{H}, G_{H}) ne dépasse pas une valeur de seuil (Msw, Gsw), on en déduit un manque d'activité du conducteur,
**caractérisé en ce que**
la valeur de la valeur de seuil (Msw, Gsw) dépend de l'état de surface, en particulier du degré d'irrégularités de la chaussée empruntée.

2. Procédé conforme à la revendication 1,
**caractérisé en ce que**
le degré d'irrégularités de la chaussée empruntée est déduit d'une accélération verticale accélérée dans la suspension des roues du véhicule.

3. Procédé conforme à la revendication 1,
**caractérisé en ce que**
le degré d'irrégularités de la chaussée empruntée est déduit de signaux de décélération et/ou d'accélération d'au moins une roue du véhicule.

4. Procédé conforme à l'une des revendications précédentes,
selon lequel en tant que première grandeur du couple manuel (M_{H}) on utilise la valeur du couple manuel mesuré,
**caractérisé en ce que**
en tant qu'autre grandeur du couple manuel (G_{H}), on prend en considération le gradient du couple manuel, et, on ne déduit à un manque d'activité du conducteur que dans le cas où,
lors de plusieurs mesures successives la valeur de la première grandeur du couple manuel (M_{H}) ne dépasse pas la première valeur de seuil (Msw) dépendant de l'état de la chaussée empruntée et également l'autre ou seconde grandeur du couple manuel (G_{H}) ne dépasse pas une seconde valeur de seuil (Gsw) prévue pour celle-ci.

5. Procédé conforme à l'une des revendications précédentes,
**caractérisé en ce que**
la grandeur d'un l'intervalle de temps pendant lequel plusieurs mesures successives du couple manuel sont effectuées, avant qu'on déduise à un manque d'activité du conducteur en cas d'un dépassement par le bas durable de la valeur de seuil, dépend de la vitesse du véhicule.

6. Procédé conforme à l'une des revendications précédentes,
**caractérisé en ce que**
dans le cas ou au moins l'une des, le cas échéant, différentes, grandeurs du couple manuel prises en considération dépasse(nt) une valeur minimum associée, on commence une nivelle série de mesures successives du couple manuel, de sorte que les mesures antérieures ne soient ainsi pas prises en considération pour la reconnaissance du manque d'activité du conducteur.

7. Procédé conforme à la revendication 6,
**caractérisé en ce que**
l'on ne commence une nouvelle série de mesures successives du couple de rotation que lorsque l'une des grandeurs du couple de rotation dépasse en continu la valeur minimum qui lui est associée pendant un intervalle de temps déterminé.

8. Procédé conforme à la revendication 6 ou 7,
**caractérisé en ce que**
la grandeur de la valeur minimum et/ou l'intervalle de temps déterminé dépend de l'état de surface en particulier du degré d'irrégularités de la chaussée empruntée.
